Europäisches Patentamt

European Patent Office

Office européen des brevets

(11) Publication number: 0 520 634 A1

# EUROPEAN PATENT APPLICATION

(21) Application number: 92305115.5

(22) Date of filing: 04.06.92

(51) Int. Cl.5: G06F 13/40

(30) Priority: 21.06.91 US 720274

(43) Date of publication of application:
30.12.92 Bulletin 92/53

(84) Designated Contracting States:
DE IT

(71) Applicant: AMP INCORPORATED
470 Friendship Road
Harrisburg Pennsylvania 17105(US)

(72) Inventor: Herrmann, Henry Otto, Jr.
705 Hess Road
Elizabethtown, Pennsylvania 17022(US)
Inventor: Steely, Lee Walter
RD No. 3 Box 3693
Mohnton, Pennsylvania 19540(US)

(74) Representative: Warren, Keith Stanley et al
BARON & WARREN 18 South End Kensington
London W8 5BU(GB)

(54) Communications medium having a dual active/passive bus.

(57) A communication system incorporating a two conductor transmission bus (40) utilizes a differential mode driver circuit (70). The driver circuit (70) includes a pair of complementary type transistors, PNP (82) and NPN (76), or similar devices, which are driven by complimentary input signals (74,72) to produce the differential signals on the two conductor bus. The bus (40) is terminated so that the characteristic impedance of the bus is maintained when the bus is not being driven.

Figure 2

The present invention relates to a communication medium having a differentially driven two conductor transmission line.

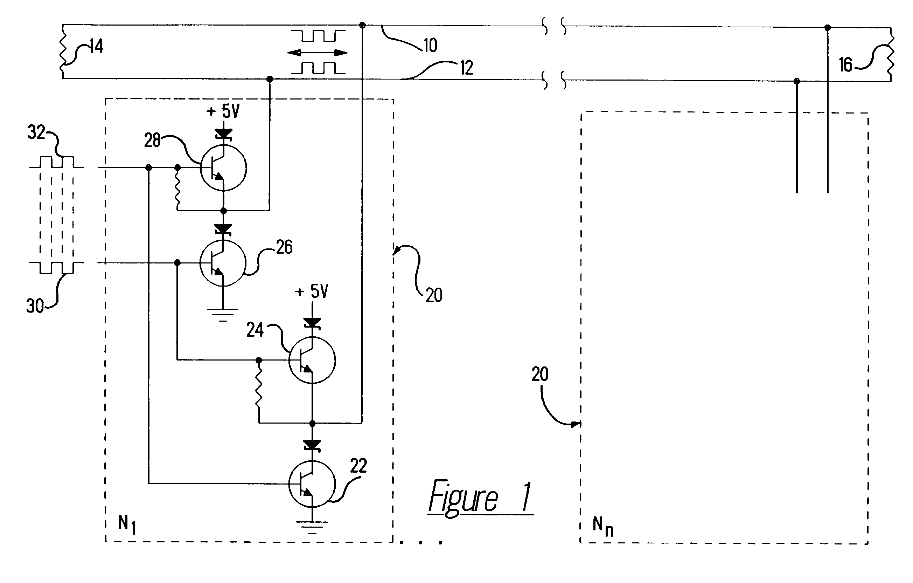

Conventional two conductor transmission lines usually include a differential mode terminating resistor at each end to maintain the characteristic impedance of the line. The line is tapped at desired locations for galvanic connection to the driver circuits of communication devices. Such a system is depicted in the schematic diagram of Figure 1. There, a two conductor transmission line 10 and 12 is shown having terminating resistors 14 and 16. A number of communications devices are interconnected to the line by means of the driver circuits 20 indicated as $N_1$ through $N_n$. The driver circuit 20 is a typical differential driver as disclosed by Texas Instruments in its 1991 catalog Interface Circuits on page 2-600. Such drivers are commonly used in transmission line applications. As is shown in Figure 1, the driver 20 includes a pair of NPN type bipolar transistors 22 and 24 for driving the line conductor 10 and a similar pair of transistors 26 and 28 for driving the line conductor 12. Complimentary input signals 30 and 32 are impressed upon the bases of the four transistors 22 through 28 as shown so that when the signal 30 is low, the signal 32 is high. This causes the transistors 22 and 28 to be conductive while the transistors 24 and 26 are open, thereby causing the conductor 12 to be high and the conductor 10 to be low. Conversely, when the signal 30 is high and the signal 32 is low, the transistors 22 and 28 are open while the transistors 24 and 26 become conductive, thereby causing the conductor 10 to go high and the conductor 12 to go low. Thus, as the input signals fluctuate between high and low states the conductor 10 fluctuates between near 5.0 volts and ground respectively while the conductor 12 fluctuates between ground and near 5.0 volts respectively. With such an arrangement the conductors 10 and 12 are either connected near 5.0 volts or ground through the transistors 22,24,26 and 28. This arrangement results in a continuous load being imposed upon the transmission line when the signals 30 and 32 are not present. Such a loading, being undesirable, is negated by additional circuitry which is not shown. This additional circuitry adds another level of complexity onto a somewhat complex driver 20 in order to tri-state the driver when inactive. Such drivers necessarily include many components which take up scarce chip space, affect system reliability, and require additional high power dissipation capability due to the potential for short circuiting. Open collector drivers solve some of these problems, however, existing devices are useful in common mode applications only.

What is needed is a communications system wherein the driver is automatically placed in a high impedance condition whenever the input signal to the driver is interrupted and the characteristic impedance of the transmission line is maintained.

The present invention relates to a communications medium having a two conductor bus being driven in differential mode. The bus, having a plurality of taps for communications devices, includes first and second conductors arranged in a bus having a characteristic impedance of $Z_0$. A constant voltage source is provided as well as at least one communications device having a differential mode driver means for differentially driving the bus. An impedance means is provided and is associated with the constant voltage source and each end of both the first and second conductors for maintaining the bus at the characteristic impedance $Z_0$ when no driver means is coupled to the bus. The driver means and the impedance means are arranged so that when the driver means is coupled to the bus, it causes the first conductor to go low and the second conductor to go high, and when the driver means is not coupled to the bus, the impedance means causes the first conductor to go high and the second conductor to go low.

An embodiment of the invention will now be described by way of example in conjunction with the accompanying drawings in which:

FIGURE 1 is a schematic diagram showing a typical prior art transmission line and associated differential mode driver; and

FIGURE 2 is a schematic diagram showing a transmission line and associated driver embodying the teachings of the present invention.

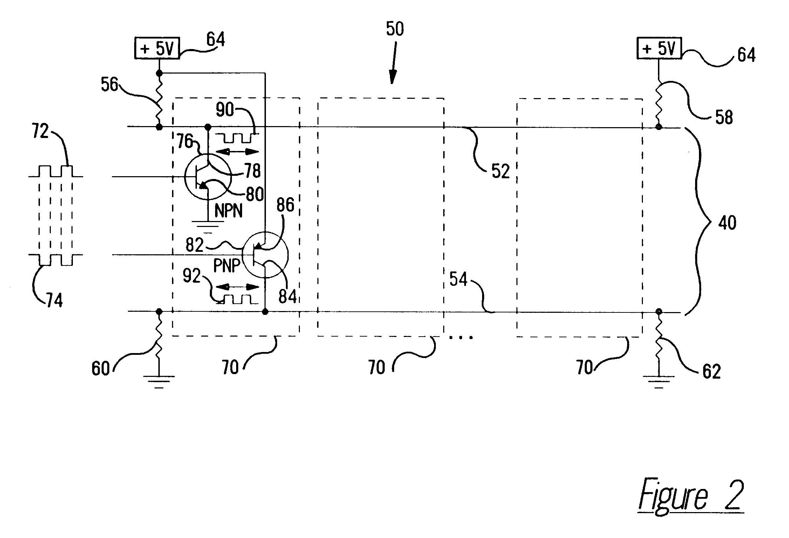

There is shown in Figure 2 a communications system 50 having a transmission line or bus 40 consisting of a first conductor 52 and a second conductor 54. The conductors 52 and 54 may be in the form of a twisted pair, flat parallel conductor, or coaxial cable. The bus 40 has a characteristic impedance of $Z_0$ which, in the present example, is about 100 ohms. Each conductor 52 and 54 is terminated at or near its ends by a termination impedance such as the resistors 56,58,60 and 62 each of which has a resistance value equal to approximately one half the characteristic impedance $Z_0$ of the bus 40, or the terminating impedance may include clamping diodes, active terminations, or similar circuitry. As shown in Figure 2, the free ends of the resistors 56 and 58 are connected to the positive side of a constant voltage source 64 which supplies, in the present example, plus 5.0 volts, and the free ends of the resistors 60 and 62 are connected to ground. A plurality of communications devices are interconnected to the bus 40 by means of driver circuits 70. The driver circuits 70 are substantially identical, each having complimentary type transistors arranged to receive mutually inverse signals 72 and 74. While bipolar transistors are shown, it will be understood that MOSFETS, JFETS or other similar devices may be utilized in the practice of the present invention. In the present example the transistors of the drive circuit 70 include a bipolar NPN type transistor 76 having its collector 78 connected to the first conductor 52 and its emitter 80 connected to ground, and a bipolar PNP type transistor 82 having its collector 84 connected to the second conductor 54 and its emitter 86 connected to the positive side of the constant voltage source 64. The input signals 72 and 74 are substantially mirror images of each other, one being the inverse of the other as shown in Figure 2, and are applied directly to the bases of the transistors 76 and 82 respectively. The signal 74 is created by an inversion circuit, not shown, that simply inverts the signal 72 so that the resulting time varying signals 72 and 74 are substantially the inverse of each other at every point in time.

In operation, when the signal 72 is at a low that is, the signal is approximately zero volts, the NPN transistor 76 is non-conducting and the conductor 52 is at a high of approximately plus 5.0 volts by virtue of the resistors 56 and 58 being connected to the positive side of the constant voltage source 64. Simultaneously with the signal 72 being at a low, the signal 74 is at a high, the PNP transistor 82 is non-conducting, and the conductor 54 is at a loin close to ground by virtue of the resistors 60 and 62 being connected to ground. When the input signal 72 goes high and the input signal 74 goes low, both transistors 76 and 82 become conducting causing the conductor 52 to go low, near ground, and the conductor 54 to go high to approximately plus 5.0 volts. Thus, as the signals 72 and 74 alternate between low and high and between high and low respectively, the bus conductors 52 and 54 alternate between near plus 5.0 volts and near zero volts respectively and between near zero volts and near plus 5.0 volts respectively, resulting in the output signal 90 being impressed on the conductor 52 and the output signal 92 being impressed on the conductor 54, these signals being substantially the inverse of each other at every point in time. The output signals 90 and 92 propagate in both directions along the bus 40.

The prior art driver, when active, provides a low impedance path for the line to either power or ground. Should a second driver become active its data would conflict with that of the first driver causing a short circuit through the two drivers. This, therefore, requires current limiting circuitry to protect the components of the drivers in such cases. This adds another layer of complexity to the prior art driver, and requires components that will withstand the greater power dissipation that occurs during such short circuits. The open collector of the present transmission system eliminates any possibility of a short circuit when more than one driver is active.

It will be appreciated by those skilled in the art that when the input signal 72 is interrupted and it goes low, the signal 74 is automatically made to go high by the inversion circuit, and the transistors 76 and 82 become non-conducting. Therefore, whenever the input signal 72 ceases, the drive circuit 70 ceases to drive the bus 40 effectively decoupling therefrom resulting in a high impedance condition. In this manner the load imposed upon the bus 40 when the driver 70 is driving the bus is automatically removed when the input signal 72 is interrupted thereby providing the equivalent of tri-stating the driver.

An important advantage of the present invention is that radiation from or to the bus 40 is substantially reduced because the bus is driven in differential mode. The use of the two complementary type transistors permits differential mode driving of the bus 40 with an automatic high impedance condition upon interruption of the input signal without the need for complex circuitry, and without the danger of short circuits when more than one driver is active. Additionally, the bus 40 is terminated so that its characteristic impedance is maintained when there is no driver driving the bus.

## Claims

1. A communications system having a two conductor (52,54) bus (40) driven in differential mode, said bus (40) having a plurality of taps for communications devices, characterized in that said system comprises:

   (a) first and second conductors (52,54) arranged in a bus (40) having a characteristic impedance of $Z_0$;
   (b) a constant voltage source (64);
   (c) at least one communications device having a differential mode driver means (70) for differentially driving said bus; and
   (d) impedance means (56,58) associated with said constant voltage source and each of said first and second conductors (52,54) for maintaining said bus (40) at said characteristic impedance $Z_0$ when no said driver means is driving said bus,
   said driver means (70) and said impedance means (56,58) arranged so that when said driver means (70) is driving said bus (40), said driver means (70) causes said first conductor (52) to go low and said second conductor (54) to go high, and when said driver means (70) is not driving said bus (40) said impedance means (56,58) causes said first conductor (52) to go high and said second conductor (54) to go low.

2. The communication system according to claim 1 characterized in that said impedance means comprises four resistors (56,58,60,62), wherein one end of each of two of said resistors (56,58) is connected to the positive side of said constant voltage source and the other end thereof is connected to said first conductor (52), so that each end of said first conductor (52) is coupled to the positive side of said constant voltage source through a respective resistor, and wherein one end of each of the other two resistors (60,62) is connected to ground and the other end thereof is connected to said second conductor (54), so that each end of said second conductor (54) is coupled to ground through a respective resistor.

3. The communication system according to claim 1 characterized in that said differential mode driver means (70) comprises a pair of complementary type transistors driven by complementary signals (72,74) which apply signals to each of said first and second conductors (52,54) so that the resulting time varying signals are substantially the inverse of each other at every point in time.

4. The communication system according to claim 3 characterized in that said pair of complementary type transistors includes an NPN transistor (76) having its collector connected to said first conductor (52) and its emitter connected to ground, and a PNP transistor (82) having its collector connected to said second conductor (54) and its emitter connected to the positive side of said constant voltage source.

_Figure 1_

EP 0 520 634 A1

*Figure 2*

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5) |
|---|---|---|---|
| X | ELECTRONIC ENGINEERING vol. 56, no. 689, May 1984, LONDON GB pages 97 - 99 CHOU E. & CONNOR G. 'A new concept in backplane communication' | 1-2 | G06F13/40 |
| Y | * page 97, middle column - right column * * page 98, middle column * * page 99, left column - middle column * * figures 2,3,5 * | 3-4 | |
| X | EP-A-0 049 917 (PHILIPS GLOEILAMPENFABRIEKEN) | 1-2 | |
| Y | * page 4, line 9 - page 5, line 3 * * page 7, line 1 - line 23 * * page 8, line 31 - page 9, line 31 * * figures 1,2,4 * | 3-4 | |
| Y | EP-A-0 400 908 (LUCAS INDUSTRIES) * column 1, line 4 - line 24 * * column 3, line 2 - line 53 * * column 4, line 8 - line 33 * * claim 1; figures 4-5 * | 3-4 | |
| | | | TECHNICAL FIELDS SEARCHED (Int. Cl.5) |
| A | IRE WESCON CONVENTION RECORD vol. 27, 1983, NORTH HOLLYWOOD US pages 1 - 5 SEABORG C. 'The D2B- A DIGITAL DATA BUS FOR SMALL AREA NETWORKS' * page 1, left column, paragraph 3 -paragraph 4 * * page 1, right column, paragraph 4 - page 2, left column, paragraph 1 * * figure 1 * | 1-4 | G06F H03K |

The present search report has been drawn up for all claims

| Place of search | Date of completion of the search | Examiner |
|---|---|---|
| THE HAGUE | 09 OCTOBER 1992 | NGUYEN Xuan Hiep |